# NEUE EUROPÄISCHE PATENTSCHRIFT

(11) **EP 1 889 890 B2**
(45) Veröffentlichungstag und Bekanntmachung des Hinweises auf die Entscheidung über den Einspruch: **18.06.2014**
(45) Hinweis auf die Patenterteilung: 27.01.2010
(21) Anmeldenummer: 07013572.8
(22) Anmeldetag: 11.07.2007
(51) Int. Cl.: C09J 131/02, C09J 5/00, C09D 131/02

(54) **Verfahren zur Applikation eines Polyvinylester-Dispersionsklebstoffes mittels Düsenauftrag und Verwendung von Polyvinylester-Dispersionsklebstoffen**
Method for applying a polyvinyl ester dispersion adhesive using a jet and use of polyvinyl ester dispersion adhesives
Procédé destiné à l'application de colles de dispersion de polyvinylester à l'aide d'une application à la buse et utilisation de colles de dispersion de polyvinylester

(30) Priorität: 08.08.2006 DE 102006037318
(43) Veröffentlichungstag der Anmeldung: 20.02.2008
(73) Patentinhaber: Celanese Emulsions GmbH, 61476 Kronberg/Ts. (DE)
(72) Erfinder: Müller, Harmin, Dr., 65719 Hofheim (DE); Faust, Hans Uwe, 65835 Liederbach (DE); Schäfer, Martin, Dr., 76829 Landau i.d. Pfalz (DE)
(74) Vertreter: Ackermann, Joachim

(56) Entgegenhaltungen:
- EP-A- 0 440 575
- EP-A- 1 113 031
- EP-A- 1 287 908
- EP-A1- 0 621 289
- WO-A-90/14223
- US-A- 6 063 858
- US-A- 6 063 858

## Beschreibung

Die vorliegende Erfindung betrifft ein Auftragsverfahren für ausgewählte Dispersionsklebstoffe durch schnelllaufende Düsen sowie die Verwendung von ausgewählten Dispersionsklebstoffen für den Düsenauftrag.

Dispersionsklebstoffe zur Verklebung von Papier in der Fließbandfertigung von Faltschachteln, Briefumschlägen, Prospekten oder Zigaretten werden oft durch ein rotierendes Segmentrad, durch eine Walze oder mittels eines Düsenauftragssystems auf das Substrat appliziert.

Bei diesen Applikationsarten, insbesondere beim rotierenden Segmentrad und der Walze, führen Verunreinigungen durch Klebstoff, welche durch "Spritzen" oder unpräzisen Klebstoffauftrag verursacht werden, zu Problemen in der Fertigung. Gelangt Klebstoff auf das Transportband, so kann dies zur Anhaftungen des gefertigten Materials führen, was zu Ausfallzeiten der Maschine, verbunden mit aufwendigen Reinigungsarbeiten führt.

Bei dem Auftrag mittels eines Segmentrades oder einer Walze werden Verschmutzungen vor allem durch die auf den Klebstoff einwirkenden Zentrifugalkräfte des rotierenden Rades in Form von "Spritzern" verursacht. Dieses versucht man in der Praxis zu vermeiden, indem die physikalisch-chemischen Eigenschaften des Klebstoffes dahingehend optimiert werden, daß starke innere Kohäsionskräfte im Klebstoff den Zentrifugalkräften entgegenwirken.

Besonders vorteilhaft ist die Verwendung von Düsen, da zum einen die Geometrie des zu verklebenden Produktes leicht angepasst werden kann und zum anderen Klebstoff eingespart werden kann.

Bei der Applikation eines Klebstoffes mittels Düsenauftragssystem treten Verschmutzungen dadurch auf, daß sich im Verlauf der Zeit zapfenförmige Ablagerungen von getrocknetem Klebstoff an der Austrittsstelle der Düse ausbilden und den aus der Düse austretenden Klebstoffstrahl ablenken. Das hat eine starke Variation bei der Präzision des Auftrags zur Folge. Eine Variation in der Präzision des Leimauftrags führt in der Folge zu einer Verschmutzung der Anlage oder sogar zu deren Stillstand.

Bei dem Auftrag eines Klebstoffes mittels Düsenauftragssystem wird der Klebstoff mittels einer Pumpe durch ein geschlossenes Leitungssystem gefördert. Am Ende des Leitungssystems sitzt eine Düse mit einem sich schnell öffnendem und schließendem Ventil. Da die zu verklebenden Papierteile auf einem Förderband mit sehr hoher Laufgeschwindigkeit von heute 100 bis 800 m/min transportiert werden, muß das Ventil eine kurze Taktzeit besitzen. Möchte man beispielsweise bei einer Bandgeschwindigkeit von 100 m/min einen Punktauftrag mit einem Punkt/cm auftragen, so werden pro Sekunde 166 Punkte appliziert. Die Öffnungszeit des Ventils liegt also hier im Bereich < 6 msec. Bei einer Bandgeschwindigkeit von 250 m/s werden 415 Punkte pro Sekunde appliziert, was einer Öffnungszeit von < 2,5 ms entspricht.

Düsenapplikationssysteme mit Schaltfrequenzen von bis zu 1000/Sekunde sind heute Stand der Technik. Die hohe Taktfrequenz der Düsenventile hat zur Folge, daß
- der Klebstoff im Inneren der Düse extrem hohen Scherkräften ausgesetzt wird, und
- pro Zeiteinheit z.B. innerhalb einer Stunde über 1.000.000 einzelne Tropfen durch eine Düse appliziert werden.
   Bedingt durch die hohe Materialscherung und die kurze Zeit, die zur Bildung eines einzelnen Tropfens durch Öffnen und Schließen des Ventils gegeben ist, können bei der Tropfenbildung am Ausgang der Düse einzelne kleinere Tropfen, sogenannte "Satellitentropfen" entstehen, die aufgrund deren hoher Anzahl am Ausgang der Düse über die Zeit einen zapfenförmigen Verschmutzungsaufbau verursachen (sogenannter Aufbau = "dirt formation").
   Die Frage, wie "sauber" ein Tropfen bei diesem Extrusionsvorgang gebildet wird, sollte von den physikalisch-chemischen Eigenschaften der Dispersion, wie beispielsweise Rheologie, Oberflächenspannung, Scherstabilität, Fließgrenze, und Elastizität abhängen.
   Im Stand der Technik sind mehrere Verfahren zum Auftrag von Klebstoffen aus Düsen beschrieben.
   So beschreibt die EP-A-523,589 ein Verfahren zum berührungslosen Aufbringen von Klebstoffpunkten mittels Düsen. Diese Schrift beschreibt ein ausgewähltes Auftragsverfahren sowie eine geeignete Vorrichtung dafür. Die Applikation erfolgt aus schnelllaufenden Düsen. Das Verfahren ist dadurch gekennzeichnet, dass ein mit Ausnehmungen versehendes Band parallel zur Linie, auf der die Düsenöffnungen liegen, über die Öffnungen der in einer Reihe angeordneten Düsen geführt wird, und dass ein periodischer Austritt von Klebstoffteilchen auf die Substratbahn erfolgt, wobei eine Bewegungsvorrichtung das Substrat in einem Abstand unterhalb des Bandes vorbeiführt. Als mögliche Klebstoffe werden unterschiedliche Formulierungen vorgeschlagen, wie z.B. Schmelzkleber, Haftkleber oder Dispersionsklebstoffe aus wässrigen oder organischen Systemen. Als geeignete Klebstoffdispersionen werden Acrylatkleber vorgeschlagen.
   EP-A-621,289 beschreibt die Verwendung von ausgewählten wässrigen Vinylester-Copolymerdispersionen als Klebmittel. Es handelt sich um Emulsionspolymerisate mit 1-10 Gew.% an thermisch vernetzbaren Comonomeren. Typische Copolymere sind Typen auf der Basis von Vinylacetat, Ethylen und N-Methylolacrylamid. Als eine mögliche Art des Aufbringens des Klebstoffs auf das Substrat wird die Düsenapplikation beschrieben.
   EP-A-1,113,031 offenbart ein Verfahren zur Klebebindung von zusammengetragenden Papierbögen. Die Beleimung kann mittels Düsenauftrag erfolgen. Als Kleber wird eine wässrige Dispersion eines anionischen, modifizierten Polyurethanelastomeren eingesetzt, beispielsweise ein Vinylacetat-Ethylen-PolyurethanCopolymer.
   DE-A-102 24 128 beschreibt ein ausgewähltes Verfahren zum Düsenauftrag von Beschichtungen auf Oberflächen. Als mögliche Klebstoffe werden unterschiedlichste Typen empfohlen, beispielsweise Schmelz-, Lösungs- und Dispersionskleber.
   In der EP-A-322,175 wird die Emulsionspolymerisation von Polyvinylalkoholstabilisierten Vinylestern gegebenenfalls mit weiteren Comonomeren, wie Ethylen, Acrylsäure oder Vinylversataten in Gegenwart von ausgewählten, mit Wasser mischbaren Kettenüberträgern beschrieben. Der Einsatz der Produkte als Klebstoffe wird empfohlen, wobei eine Auftragsmethode die Düsenapplikation ist.
   GB-A-1,438,993 offenbart Vinylacetat-Ethylen-Copolymere, die mit ausgewählten Monomeren gepfropft werden. Die Produkte werden für den Einsatz als Schmelz-, Lösungs- und Dispersionskleber empfohlen, wobei eine Auftragsmethode die Düsenapplikation ist.
   In der EP-A-420,998 werden wässrige Schmelzklebstoff-Suspensionen oder -Emulsionen beschrieben, die sich von Vinylacetat und gegebenenfalls weiteren Comonomeren, wie Ethylen, Schutzkolloiden und Emulgatoren ableiten und die durch Verwendung eines monomerlöslichen Initiators hergestellt worden sind. Diese Klebstoffe eignen sich zum Sprühauftrag durch Düsen.

Die WO-A-03/010,256 beschreibt wasserlösliche oder -dispergierbare Schmelzkleber, die durch Pfropfcopolymerisation von ausgewählten olefinisch ungesättigten Monomeren, unter anderem von Vinylestern, auf Polyalkylenoxide hergestellt werden. Als eine mögliche Applikationsmethode wird neben dem Auftrag aus der Schmelze auch die Applikation aus Düsen empfohlen.

In der EP-A-1,287,908 werden wässrige Polymerdispersionen für den Sprayauftrag ohne den Einsatz von Luft beschrieben. Dazu zählen unter anderem Emulgator- oder Schutzkolloid-stabilisierte Polyvinylacetat- und Ethylen-Vinylacetat-Copolymer Dispersionen. Weitere Einzelheiten zu den Klebstoffsystemen sind nicht offenbart. Ein Hinweis auf die Eignung dieser Dispersionen für die Applikation aus schnelllaufenden Düsen und in Form von diskreten Bereichen auf einem Substrat ist diesem Dokument nicht zu entnehmen. Die Dispersionen werden hauptsächlich für das Imprägnieren der vollständigen Fläche von Nonwovens eingesetzt.

Die EP-A-1,510,529 offenbart ein Verfahren zur Herstellung von multimodalen Polymerdispersionen. Dabei werden Mischungen ausgewählter Schutzkolloide eingesetzt. Die beschriebenen Polymerdispersionen weisen mit 20000 mPas (bei 21 °C) vergleichsweise hohe Viskositäten auf und sind für Düsenapplikationen ungeeignet.

EP-A-440,5755 beschreibt ein Verfahren zum Beleimen einer oder mehrerer longitudinaler Zonen einer Papierbahn, wobei Klebstoff durch Sprühauftrag appliziert wird.

In der WO-A-90/14,223 wird werden wässrige Vinylester-Dispersionen beschrieben, die in Form eines dünnen Strahls durch eine Düse auf ein Substrat appliziert werden. Dabei werden mit Polyvinylalkohol stabilisierte Vinylester-Dispersionen eingesetzt.

US-A-6,063,858 offenbart ein Klebmittel auf Basis eines Vinylacetat-EthylenCopolymeren für schwierig miteinander zu verbindende Oberflächen.

Handelsübliche Dispersionen zeigen unter definierten Laborbedingungen nach zwei Stunden einen Verschmutzungsaufbau an der Düse von mehr als 4 mm bis hin zur kompletten Verschmutzung. In der Praxis heißt das, daß unter Umständen mehrfach am Tag ein fünfminütiges Anhalten der Maschine zur Reinigung der Düsen notwendig wird mit entsprechender Unterbrechung der Produktion.

Ausgehend von diesem Stand der Technik bestand die Aufgabe der vorliegenden Erfindung darin, ein Düsenapplikationsverfahren zur Verfügung zu stellen, bei dem eine Klebstoffdispersion mit günstigen chemisch-physikalischen Eigenschaften zum Einsatz kommt, so daß sich ein signifikant günstigeres Aufbauverhalten, vorzugsweise kein Aufbauverhalten zeigt.

So sollen die Stillstandszeiten der Anlagen erheblich reduziert werden. Auch soll unter definierten Laborbedingungen ein deutlich reduzierter Verschmutzungsaufbau erfolgen, beispielsweise nach zwei Stunden ein Verschmutzungsaufbau von < 1 mm, insbesondere < 0,5 mm.

Gelöst wird diese Aufgabe durch den Einsatz von ausgewählten Dispersionsklebstoffen bei der Düsenapplikation, die maßgeblich emulgatorstabilisiert sind.

Die vorliegende Erfindung betrifft ein Auftragsverfahren für Dispersionsklebstoffe durch Düsen auf ein Substrat, worin der Düse eine wässrige, durch Emulgatoren stabilisierte Vinylesterpolymerdispersion mit einem Feststoffgehalt von mindestens 40 Gew. %, einer Viskosität von kleiner als 8000 mPas zugeführt wird und von der Düse in Form eines dünnen Strahls oder von Abschnitten von dünnen Strahlen auf das Substrat aufgetragen wird, wobei das Vinylesterpolymere eine Glasübergangstemperatur, bestimmt durch DSC Messung mit einer Aufheizgeschwindig kert von 10k/Minute, von -30 bis + 40 °C aufweist.

Unter Vinylesterpolymer ist im Rahmen dieser Beschreibung ein Vinylesterhomopolymer oder ein Vinylestercopolymer zu verstehen.

Der Strahl hat vorzugsweise einen Durchmesser von kleiner als 6 mm, besonders bevorzugt einen Durchmesser von 0,1 bis 2 mm.

Die Viskosität der erfindungsgemäß eingesetzten Vinylesterpolymerdispersionen beträgt vorzugsweise 100 bis 8000 mPas, insbesondere 200 bis 4000 mPas und ganz besonders bevorzugt 400 bis 3000 mPas. Für die Zwecke dieser Beschreibung erfolgt die Viskositätsmessung mit dem Brookfield-Viskosimeter bei 23°C unter Verwendung der Spindel 5, bei 23 Umdrehungen pro Minute (Upm).

Selbstverständlich kann die Dispersion auch weiter verdünnt werden, um auf der Düse angewendet werden zu können. Dabei erniedrigt sich sowohl der Feststoffgehalt als auch die Viskosität.

Die Polymeren oder Copolymeren der erfindungsgemäß eingesetzten Dispersionen weisen Glasübergangstemperaturen von typischerweise -30 bis +40°C, vorzugsweise von -30 bis +15 °C, besonders bevorzugt von -20 bis +10°C auf. Bei von 10k/Minute, heterogenen Systemen wie zum Beispiel Kern-Schale oder Hemisphären ist mindestens eine Glasübergangstemperatur zwischen -30 bis +40°C, vorzugsweise von -30 bis +15 °C, besonders bevorzugt von -20 bis +10°C. Für die Zwecke der vorliegenden Beschreibung wird die Glasübergangstemperatur durch DSC-Messung bestimmt mit einer Aufheizgeschwindigkeit von 10 K/Minute.

Für die Anwendung wird die Vinylesterpolymerdispersion durch Düsen auf ein Substrat aufgebracht. Dazu wird der Düse in an sich bekannter Weise die wässrige, emulgatorstabilisierte Vinylesterpolymerdispersion, die typischerweise einen Feststoffgehalt von mindestens 40 Gew. % sowie eine Viskosität von kleiner als 8000 mPas aufweist, zugeführt und von der Düse in Form eines Strahls oder eines in vorbestimmter Weise unterbrochenen Strahls auf das Substrat aufgetragen.

Erfindungsgemäß können sämtliche Düsenapplikationssysteme eingesetzt werden, insbesondere Systeme mit hohen Schaltfrequenzen von bis zu 500 Punkten/ Sekunde.

So lässt sich der Dispersionsklebstoff beispielsweise durch HHS Düsenauftragssysteme der Fa. HHS, Krefeld aufbringen. Dabei kann es sich um D-Ventile oder um Vario-Ventile handeln. Typischerweise arbeiten diese Systeme mit folgenden technischen Daten:

D-Ventile: Leimdruck bis 35 bar; Leimviskosität bis 2500 mPa*s; Schaltfrequenz bis 500 /sec; und Düsendurchmesser 0,4 mm.

Vario-Ventile: Leimdruck bis 6 bar; Leimviskosität bis 500 mPa*s; Schaltfrequenz bis 1000 /sec; und Düsendurchmesser 0,4 mm.

Weitere geeignete Düsenauftragssysteme sind die Systeme der ECNS-Serie der Fa. Robatech Glueing Technologie. Diese Systeme weisen typischerweise folgende technische Daten auf: Leimdruck 1-6 bar; Leimviskosität max. 500 mPa*s; Schaltfrequenz max. 600 / sec; und Düsendurchmesser 0,1 - 0,6 mm.

Weitere geeignete Düsenauftragssysteme sind die Systeme der Fa. ITW Dynatec Klebtechnik, Mettmann; der Fa. Reuther, Aichach und der Fa. Nordson Deutschland GmbH, Erkrath.

Mittels der Düsenauftragssysteme wird die wässrige, Emulgator-stabilisierte Vinylesterpolymerdispersion dem Substrat in Form eines Strahls oder eines in vorbestimmter Weise unterbrochenen Strahls appliziert. Beim Auftrag der Vinylesterpolymerdispersion erfolgt keine Sprühapplikation, sondern es werden Klebstoffstrahlen oder Abschnitte solcher Strahlen auf das Substrat aufgebracht.

Mit dem erfindungsgemäßen Verfahren sind unterschiedliche Geometrien der auf die Substratoberfläche aufgebrachten Vinylesterdispersionen möglich. So lassen sich beispielsweise vorbestimmte Muster von Klebepunkten oder Klebelinien erzeugen.

Als Substrate eignen sich beliebige miteinander zu verbindende Materialien. Diese können glatte, rauhe oder poröse Oberflächen aufweisen und in verschiedenen Ausformungen vorliegen, beispielsweise als flächige Materialien. Auch hinsichtlich des Materials sind die Substrate keinen Beschränkungen unterworfen. Beispiele für Materialien, aus denen die zu verklebenden Substrate bestehen können, sind Metalle, Kunststoffe, Lackoberflächen, Papier, Textilen, Non-Wovens oder Naturstoffe, wie Holz.

Die zu verklebenden Substrate können saugfähige Oberflächen oder hydrophobe Oberflächen besitzen. Beispiele für saugfähige Oberflächen sind Papiere einschließlich Pappe und Kartons sowie andere Faservliese. Beispiele für hydrophobe Oberflächen sind Kunststofffolien (z.B. Polyesterfolie, Polyolefinfolie wie beispielsweise Polypropylen oder Polyethylen, Polystyrolfolie, Acetatfolie) oder UV-Lack beschichtete Papiere. Jede beliebige Kombination kann in der Praxis vorkommen

Bevorzugt werden Auftragsverfahren, bei denen der Dispersionsklebstoff auf ein flächiges Substrat mit Lackoberflächen aufgebracht wird.

Ebenfalls bevorzugt werden Auftragsverfahren, bei denen der Dispersionsklebstoff auf ein flächiges Substrat mit mindestens einer saugfähigen Oberfläche aufgebracht wird.

Außerdem bevorzugt werden Auftragsverfahren, bei denen ein Substrat eingesetzt wird, das flächig und gleichzeitig flexibel ist, vorzugsweise Papier, Pappe, Kartons oder ein Faservlies. Dabei werden besonders bevorzugt Verklebungen auf der Basis von Papier/Papier oder von Papier/Kunststofffolie hergestellt.

Die erfindungsgemäß eingesetzten Vinylesterpolymerdispersionen eignen sich besonders gut für Klebstoffe zur Anwendung auf Düsen. Ferner lassen sich die Verklebeeigenschaften durch den Einbau von "weichen" Comonomeren, wie Ethylen oder Acrylaten, in das Polymer steuern.

Überraschenderweise wurde gefunden, dass durch den Einsatz einer wässrigen Vinylesterpolymerdispersion, die hauptsächlich mit nichtionischen und/oder ionischen Emulgatoren stabilisiert ist, Dispersionsklebstoffe mit ausgezeichneten Düsenlaufeigenschaften in Bezug auf Verschmutzungsaufbau formuliert werden können, ohne dass die Verklebeeigenschaften beeinträchtigt werden.

Die erfindungsgemäß eingesetzten Vinylesterpolymerdispersionen werden durch radikalische Emulsionspolymerisation von wenigstens eines Vinylestermonomeren hergestellt und werden hauptsächlich durch Emulgatoren stabilisiert. Das Monomer oder die Monomerkombination wird so gewählt, dass die Polymeren oder Copolymeren der erfindungsgemäß eingesetzten Vinylesterpolymerdispersionen Glasübergangstemperaturen von typischerweise -30 bis +40 °C, vorzugsweise -30 bis +15 °C, besonders bevorzugt von -20 bis +10°C aufweisen. Bei heterogenen Systemen, wie zum Beispiel Kern-Schale oder Hemisphären, bewegt sich mindestens eine Glasübergangstemperatur in den oben genannten Grenzen, während sich die Glasübergangstemperatur der anderen Phase sich auch außerhalb dieser Grenzen bewegen kann.

Neben dem Vinylestermonomer oder den Vinylestermonomeren kann das erfindungsgemäß eingesetzte Vinylesterpolymer sich von weiteren damit copolymerisierbaren wenigstens eine monoethylenisch ungesättigte Gruppe aufweisenden Monomeren ableiten. Als wenigstens eine monoethylenisch ungesättigte Gruppe aufweisende Monomere kommen die an sich bekannten radikalisch polymerisierbaren Monomeren in Betracht. Diese sind allerdings so auszuwählen, dass Vinylesterpolymere mit den oben angegebenen Glasübergangstemperaturen entstehen.

Dabei können Polymere mit homogenen und heterogenen Morphologien erzeugt werden.

Als Vinylestermonomere kommen beispielsweise Vinylester von ein bis achtzehn Kohlenstoffatome aufweisenden Monocarbonsäuren in Betracht. Diese können vorzugsweise mit aromatischen und/oder aliphatischen α,β-ungesättigten, gegebenenfalls halogen-substituierten Kohlenwasserstoffen, wie Ethen, Propen, 1-Buten, 2-Buten, Vinylchlorid, Vinylidenchlorid, Styrol, α-Methylstyrol, o-Chlorstyrol, wobei Ethen bevorzugt ist, und/oder mit Acrylaten und/oder mit Methacrylaten, wie Alkylacrylaten und/oder Alkylmethacrylaten, und/oder mit Dialkylestern ungesättigter Dicarbonsäuren copolymerisiert sein. Beispiele für besonders bevorzugte Vinylester sind weiter unten aufgeführt.

Bei den Acrylat- und/oder Methacrylatcomonomeren kann es sich um Ester von Alkoholen mit ein bis achtzehn Kohlenstoffatomen handeln, wie Methylmethacrylat oder -acrylat, Butyl-methacrylat oder -acrylat, 2-Ethylhexylmethacrylat oder -acrylat; bei den aromatischen und/oder aliphatischen α,β-ungesättigten, gegebenenfalls halogen-substituierten Kohlenwasserstoff-Comonomeren kann es sich um Ethen, Propen, 1-Buten, 2-Buten, Vinylchlorid, Vinylidenchlorid, Styrol, α-Methylstyrol, o-Chlorstyrol, wobei Ethen bevorzugt ist, handeln.

Besonders bevorzugt setzt man Vinylestercopolymerisate ein, die sich von Kombinationen von "harten" und "weichen" Monomeren ableiten. Unter "harten" Monomeren sind Verbindungen zu verstehen, deren Homopolymere eine Glasübergangstemperatur von größer als 30°C aufweisen; unter "weichen" Monomeren sind Verbindungen zu verstehen, deren Homopolymere eine Glasübergangstemperatur von kleiner gleich 30°C aufweisen.

Beispiele für harte Monomere sind Methylmethacrylat, Vinylacetat, Vinyl-1-methylcyclohexanoat, Isobornylacrylat, Isobornylmethacrylat, Vinylester einer αverzweigten Carbonsäure mit 9 Kohlenstoffatomen im Säurerest (VeoVa^{®} 9), Vinylbenzoat, Vinyl-phenyl-iso-butanoat, Vinyl-phenyl-propionat, Vinyl-t-butylbenzoat, Vinylcyclohexanoat, Vinyltoluoat, N-Vinylformamid, Dimethylmaleinat, Di-t-butylmaleinat, Di-cyclohexylmaleinat, Isopropenylacetat, Vinylchlorid und Acrylnitril.

Beispiele für weiche Monomere sind Butylacrylat, 2-Ethylhexylacrylat, Ethylen, Laurylacrylat, Vinyllaurat, Vinylester einer α-verzweigten Carbonsäure mit 10 oder 11 Kohlenstoffatomen im Säurerest (VeoVa^{®} 10 oder VeoVa^{®}11) oder Vinyl-2-ethyl-hexanoat.

Die genannten Vinylester-, Acrylat-, Methacrylat-, Diester ungesättigter Dicarbonsäure-, aromatische oder aliphatische α,β-ungesättigte Kohlenwasserstoff-Monomere bilden in der Regel die Hauptmonomeren der erfindungsgemäß eingesetzten Vinylesterpolymerdispersionen, die in Bezug auf die Gesamtmenge der nach dem Verfahren der radikalischen wässrigen Polymerisation zu polymerisierenden Monomeren normalerweise einen Anteil von mehr als 40 Gew. % auf sich vereinen.

In aller Regel weisen diese Monomeren in Wasser bei Normalbedingungen (25°C, 1,013*10⁵ Pa (1 atm)) lediglich eine mäßige bis geringe Löslichkeit auf.

Selbstverständlich können weitere Comonomere, welche die Eigenschaften in gezielter Weise modifizieren, zugesetzt werden. Solche Monomere werden im Normalfall lediglich als modifizierende Monomere in Mengen, bezogen auf die Gesamtmenge der zu polymerisierenden Monomeren, von weniger als 20 Gew. %, in der Regel 0,1 bis 20, vorzugsweise 0,3 bis 10 Gew. % einpolymerisiert.

Monomere, die üblicherweise die innere Festigkeit von Verfilmungen der wässrigen Polymervinylesterdispersionen erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf.

Besonders vorteilhaft sind dabei die Di-Ester zweiwertiger Alkohole mit a,β-monoethylenisch ungesättigten Monocarbonsäuren, unter denen die Acryl und Methacrylsäure bevorzugt sind.

In diesem Zusammenhang von besonderer Bedeutung sind auch die Methacrylsäure- und Acrylsäure-C₁-C₉-Hydroxyalkylester, wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat.

Besonders bevorzugt wird ein Vinylester-Copolymer eingesetzt, das durch radikalische Emulsionspolymerisation hergestellt worden ist und das wenigstens 40 Mol. %, bezogen auf die Gesamtmenge der eingesetzten Monomeren, an Vinylestermonomer oder Gemisch von Vinylestermonomeren aufweist.

Eine erfindungsgemäß besonders bevorzugt eingesetzte wässrige Vinylester-copolymer-Dispersion leitet sich von mindestens einem Vinylestercopolymer ab, das durch Emulsionspolymerisation mindestens eines Vinylesters einer aliphatischen Carbonsäure und mindestens eines damit copolymerisierbaren Monomers in Gegenwart mindestens eines nichtionischen Emulgators und/oder mindestens eines anionischen Emulgators und gegebenenfalls mindestens eines molekular oder dispers in Wasser löslichen Polymeren erhalten wurde.

Bevorzugt eingesetzte Emulgatoren sind dabei nichtionische Emulgatoren mit Alkylenoxidgruppen und/oder anionische Emulgatoren mit Sulfat-, Sulfonat-, Phosphat- und/oder Phosphonatgruppen, die gegebenenfalls zusammen mit molekular oder dispers in Wasser löslichen Polymeren, vorzugsweise zusammen mit Polyvinylalkohol, eingesetzt werden.

Besonders bevorzugt eingesetzte wässrige Polyvinylesterdispersionen enthalten mindestens ein Vinylester-Copolymer, das durch Emulsionspolymerisation mindestens eines Vinylesters einer aliphatischen Carbonsäure und mindestens eines damit copolymerisierbaren Monomers in Gegenwart mindestens eines nichtionischen Emulgators und/oder mindestens eines anionischen Emulgators und 0 bis 2 Gew. %, bezogen auf die Gesamtmenge der Monomeren, mindestens eines Polyvinylalkohols erhalten wurde.

Ganz besonders bevorzugt eingesetzte Vinylestercopolymere leiten sich ab von
A1) Vinylestern von aliphatischen, gesättigten Carbonsäuren mit einer Kettenlänge von C₁-C₄,
A2) alpha-Olefinen mit 2 bis 8 C-Atomen, und/oder
A3) Vinylestern von aliphatischen, gesättigten Carbonsäuren mit einer Kettenlänge von C₅-C₁₈, insbesondere Vinylestern von α-verzweigten Carbonsäuren mit 5 bis 11 Kohlenstoffatomen im Säurerest (^{®}Versaticsäuren),
A4) gegebenenfalls Estern von ethylenisch ungesättigten Mono- oder Dicarbonsäuren, insbesondere von Acrylsäure und/oder von Methacrylsäure und/oder von Maleinsäure, mit einwertigen gesättigten Alkholen, insbesondere Butylacrylat (BuA) und/oder 2 Ethylhexylacrylat (2-EHA) und/oder Dibutylmaleinat und/oder Dioctylmaleinat, sowie
A5) gegebenenfalls weiteren Comonomeren, welche nicht in eine der Gruppen A1 bis A4) fallen, wobei die Summe der Monomeren der Typen A1, A2 und/oder A3 und/oder gegebenenfalls A4 und/oder gegebenenfalls A5 100 Gew.-% ergeben.

Besonders bevorzugt eingesetzte Vinylester-Copolymere leiten sich ab von Monomeren der Typen A1, A2 und/oder gegebenenfalls A4) oder A1, A3 und/oder gegebenenfalls A4) oder bevorzugt von Monomeren der Typen A1, A2, A3 und/oder gegebenenfalls A4).

Bei den Vinylestern A1 von aliphatischen gesättigten Carbonsäuren der Kettenlänge C₁-C₄ handelt es sich um Vinylester von geradkettigen oder verzweigten aliphatischen Carbonsäuren, beispielsweise um Vinylformiat, Vinylacetat, Vinylpropionat, Vinylbutyrat oder Vinylisobutyrat. Vinylacetat ist bevorzugt. Die Vinylester A1 können im Polyvinylester auch in Kombination von zwei oder mehreren davon nebeneinander vorliegen.

Der Anteil der Monomeren A1, gegebenenfalls in Kombination mit weiteren Comonomeren aus dieser Gruppe, beträgt 40 bis 95 Gew.-%, vorzugsweise 50 bis 80 Gew. %, bezogen auf die Gesamtmenge der eingesetzten Monomeren.

Bei den alpha-Olefinen mit 2 bis 8 C-Atomen A2 handelt es sich um verzweigte oder um geradkettige alpha-Olefine, beispielsweise um Prop-1-en, But-1-en, Pent-1-en, Hex-1-en, Hept-1-en, Oct-1-en und insbesondere um Ethylen.

Der Anteil der Monomeren A2, gegebenenfalls in Kombination mit weiteren Comonomeren aus dieser Gruppe, beträgt 0 bis 45 Gew.-%, bevorzugt 5 bis 45 Gew.-%, besonders bevorzugt 8 bis 30 Gew. %, ganz besonders bevorzugt 12 bis 28 Gew.-%, bezogen auf die Gesamtmenge der eingesetzten Monomeren.

Bei den Vinylestern A3 von aliphatischen gesättigten Carbonsäuren der Kettenlänge C₅-C₁₈ handelt es um Vinylester von geradkettigen oder vorzugsweise von verzweigten aliphatischen Carbonsäuren, beispielsweise um Vinylester von αverzweigten Carbonsäuren mit 5 bis 11 Kohlenstoffatomen im Säurerest (^{®}Versaticsäuren), die Vinylester der Pivalin-, 2-Ethylhexan-, Laurin-, Palmitin-, Myristin- und Stearinsäure. Vinylester von Versaticsäuren, insbesondere VeoVa^{®} 9, VeoVa® 10 und VeoVa® 11, sind bevorzugt. Die Vinylester A3 können im Polyvinylester auch in Kombination von zwei oder mehreren davon nebeneinander vorliegen.

Der Anteil der Monomeren A3, gegebenenfalls in Kombination mit weiteren Comonomeren aus dieser Gruppe, beträgt 0 bis 60 Gew.-%, bevorzugt 0 bis 40 Gew.-%, besonders bevorzugt 0 bis 30 Gew. %, ganz besonders bevorzugt 0 bis 25 Gew.-%, bezogen auf die Gesamtmenge der eingesetzten Monomeren.

Geeignete Comonomere der Gruppe A4, die im Copolymerisat Verwendung finden können, sind Comonomere, mit denen die Klebeeigenschaften gezielt eingestellt werden können. Hierzu zählen in erster Linie Ester ethylenisch ungesättigter Mono- oder Dicarbonsäuren mit einwertigen gesättigten Alkoholen, insbesondere Ester der Acryl-, Methacryl- und/oder Maleinsäure mit aliphatischen C₁-C₈-Monoalkoholen, insbesondere (Meth)acrylsäureester oder Maleinsäureester einwertiger aliphatischer gesättigter Alkohole der Kettenlänge C₄-C₈. Beispiele für besonders bevorzugte Monomere dieses Typs sind Butylacrylat, 2-Ethylhexylacrylat, Dibutylmaleinat und/oder Dioctylmaleinat.

Der Anteil der Monomeren A4, gegebenenfalls in Kombination mit weiteren Comonomeren aus dieser Gruppe, beträgt 0 bis 45 Gew.-%, bevorzugt 0 bis 40 Gew.-%, besonders bevorzugt 0 bis 30 Gew. %, ganz besonders bevorzugt 0 bis 20 Gew.-%, bezogen auf die Gesamtmenge der eingesetzten Monomeren.

Geeignete Comonomere der Gruppe A5 besitzen vorzugsweise mindestens eine stabilisierende nichtionische oder ionische Gruppe, vorzugsweise eine Säuregruppe oder eine OH-Gruppe im Molekül, die das Emulsionspolymer zusätzlich über polymergebundene funktionelle Gruppen und/oder Ladungen stabilisieren.

Als Comonomere A5 mit stabilisierenden nichtionischen Gruppen eignen sich insbesondere Ester von ethylenisch ungesättigten aliphatischen Mono- und/oder Dicarbonsäuren mit Polyalkylenglykolen, vorzugsweise mit Polyethylenglykolen und/oder Polypropylenglykolen, oder Ester von ethylenisch ungesättigten Carbonsäuren mit Aminoalkoholen, wie (Meth)acrylsäureester von Aminoalkoholen, beispielsweise von Diethylaminoethanol, und/oder (Meth)acryl-säureester mit Dimethylaminoethanol, sowie (Meth)acrylsäureester mit zweiwertigen aliphatischen Alkoholen der Kettenlänge C₂-C₁₈, bei denen nur eine Alkoholgruppe verestert ist. Ferner eignen sich Amide von ethylenisch ungesättigten Carbonsäuren, wie Amide der Acryl- und Methacrylsäure und N-Methylolamide der Acryl- und Methacrylsäure sowie deren Ether. Eine weitere Gruppe dieser Monomeren sind N-Vinylamide einschließlich der N-Vinyllactame, beispielsweise Vinylpyrrolidon oder N-Vinyl-N-methylacetamid.

Als Comonomere A5 mit stabilisierenden ionischen Gruppen eignen sich ethylenisch ungesättigte Carbonsäuren oder Sulfonsäuren, die ein- oder zwei Carboxylgruppen oder eine Sulfonsäuregruppe aufweisen. Anstelle der freien Säuren können auch deren Salze, vorzugsweise Alkali- oder Ammoniumsalze eingesetzt werden.

Beispiele dafür sind Acrylsäure, Methacrylsäure, Crotonsäure, Maleinsäure, Fumarsäure, Itaconsäure, Vinylsulfonsäure, Styrolsulfonsäure, Halbester der Malein- bzw. Fumarsäure und der Itaconsäure mit einwertigen aliphatischen gesättigten Alkoholen der Kettenlänge C₁-C₁₈ sowie deren Alkali- und Ammoniumsalze oder (Meth)acrylsäureester von Sulfoalkanolen, beispielsweise Natrium-2-sulfoethylmethacrylat.

Weitere Comonomere A5, mit denen die Klebeeigenschaften gezielt eingestellt werden können, sind ethylenisch ungesättigte Silane. Dabei handelt es sich typischerweise um Monomere der allgemeinen Formel RSi(CH₃)₀₋₂(OR¹)₃₋₁, wobei R die Bedeutung CH₂=CR²-(CH₂)₀₋₁ oder CH₂=CR²CO₂-(CH₂)₁₋₃ hat, R' ein unverzweigter oder verzweigter, gegebenenfalls substituierter Alkylrest mit 1 bis 12 C-Atomen ist, der gegebenenfalls durch eine Ethergruppe unterbrochen sein kann, und R² für H oder CH₃ steht.

Zu weiteren Comonomeren A5, die im Vinylestercopolymerisat Verwendung finden können, sind beliebige Comonomere einsetzbar, die nicht den Gruppen A1, A2, A3 oder A4 angehören. Beispiele dafür sind Ester aliphatischer Carbonsäuren der Kettenlänge C₃-C₁₂ mit ungesättigten Alkoholen der Kettenlänge C₃-C₁₈, Vinylchlorid, Vinylidenchlorid, Acrylnitril und Methacrylnitril, Butadien, Isopren, C₉-C₁₆ alpha-Olefine, 2-Chlorbutadien, 2,3-Dichlorbutadien, Tetrafluorethylen, Styrol, Vinylether von einwertigen aliphatischen gesättigten Alkoholen der Kettenlänge C₁-C₁₈, Divinyl- und Diallylester von gesättigten und ungesättigten aliphatischen Dicarbonsäuren der Kettenlänge C₃-C₁₈, Vinyl- und Allylester der Acrylsäure und Crotonsäure, Triallylcyanurat und ethylenisch ungesättigte Epoxidverbindungen, wie Glycidylmethacrylat oder Glycidylacrylat.

Bevorzugt als weitere Comonomere A5 sind C₁₄-C₁₆ alpha-Olefine oder Butadien oder ethylenisch ungesättigte Epoxidverbindungen.

Die Menge der gegebenenfalls vorhandenen weiteren Comonomeren A5, gegebenenfalls in Kombination mit weiteren Comonomeren aus dieser Monomergruppe, beträgt typischerweise bis zu 10 Gew.-% , vorzugsweise bis zu 8 Gew.-%, bezogen auf die gesamte Copolymerzusammensetzung A).

Die Comonomeren A5 können im Polyvinylester auch in Kombination von zwei oder mehreren davon nebeneinander vorliegen.

Bevorzugt eingesetzte Vinylestercopolymere leiten sich ab von Monomeren des Typs A1, A2 und gegebenenfalls A4 und von Ethylen als Monomer des Typs A2.

Besonders bevorzugt eingesetzt werden Dispersionen enthaltend Polyvinylacetat-Ethylen-Copolymere, die insbesondere zwischen 12 und bis zu 40 Gewichtsteile Ethylen enthalten.

Ganz besonders bevorzugt eingesetzt werden Vinylacetat-Ethylen-Copolymere oder mit Acrylatmonomeren und/oder mit Dialkylmaleinat A4 modifizierte Vinylacetat-Ethylen-Copolymere.

Weitere ganz besonders bevorzugt eingesetzten Vinylestercopolymere leiten sich ab von Monomeren des Typs A1, A3 und gegebenenfalls A4, wobei das Monomere des Typs A3 ein Vinylester von α-verzweigten Carbonsäuren mit 9 bis 11 Kohlenstoffatomen im Säurerest ist.

Eine andere bevorzugt eingesetzte Variante von Dispersionen enthält Vinylacetat-Ethylen-Copolymere, die zusätzlich 0,5 bis 40 Gewichtsteile von Estern der Acrylsäure und/oder von Estern der Methacrylsäure und/oder von Diestern der Maleinsäure mit einwertigen gesättigten Alkoholen, insbesondere Butylacrylat (BuA) und/oder 2 Ethylhexylacrylat (2-EHA) und/oder Dibutylmaleinat und/oder Dioctylmaleinat, einpolymerisiert erhalten.

Bevorzugte Monomerkombinationen zur Herstellung von Vinylester-Copolymeren sind Vinylacetat/Ethylen, Vinylacetat/ Vinylester von α-verzweigten Carbonsäuren mit 5 bis 11 Kohlenstoffatomen im Säurerest, Vinylacetat/Dibutylmaleinat, Vinylacetat/Dioctylmaleinat, Vinylacetat/2-Ethylhexylacrylat, Vinylacetat/Butylacrylat, Vinylacetat/Ethylen/Butylacrylat und Vinylacetat/Ethylen/2-Ethylhexylacrylat.

Der Feststoffanteil der erfindungsgemäß bevorzugt eingesetzten wässrigen Vinylesterpolymerdispersionen beträgt typischerweise 40 bis 70 Gew.-%, vorzugsweise 45 bis 60 Gew. %, bezogen auf den Gesamtfeststoffgehalt, besonders bevorzugt zwischen 50 und 55 %.

Die erfindungsgemäß eingesetzte Vinylesterpolymerdispersion enthält nichtionische Emulgatoren E1 und/oder anionische Emulgatoren E2, wobei die nichtionischen Emulgatoren bevorzugt sind. Die Vinylesterpolymerdispersion kann zusätzlich geringe Mengen an polymeren Stabilisatoren (Schutzkolloide) enthalten.

Beispiele für nichtionische Emulgatoren E1 sind Acyl-, Alkyl-, Oleyl- und Alkylaryloxethylate. Diese Produkte sind beispielsweise im Handel unter der Bezeichnung Genapol®, Lutensol® oder Emulan® erhältlich. Hierunter fallen beispielsweise ethoxilierte Mono-, Di- und Tri-Alkylphenole (EO-Grad: 3 bis 50, Alkylsubstituentenrest: C₄ bis C₁₂) sowie ethoxilierte Fettalkohole (EO-Grad: 3 bis 80; Alkylrest: C₈ bis C₃₆), speziell C₁₂-C₁₄-Fettalkohol(3-40)ethoxilate, C₁₃-C₁₅-Oxoalkohol(3-40)ethoxilate, C₁₆-C₁₈-Fettalkohol(11-80)ethoxilate, C₁₀-Oxoalkohol(3-40)ethoxilate, C₁₃-Oxoalkohol(3-40)ethoxilate, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, die Polyethylenoxid(4-40)-Ether von Oleylalkohol sowie die Polyethenoxid(4-40)-Ether von Nonylphenol. Besonders geeignet sind die Polyethylenoxid(4-40)-Ether von Fettalkoholen, insbesondere von Oleylalkohol, Stearylalkohol oder C₁₁-Alkylalkoholen.

An nichtionischen Emulgatoren E1 werden typischerweise 1 bis 6,0 Gew.%, vorzugsweise 2 bis 5,0 Gew.%, besonders bevorzugt 2 bis 4,5 Gew. % bezogen auf das Polymere, verwendet. Es lassen sich auch Gemische von nichtionischen Emulgatoren einsetzen.

Beispiele für anionische Emulgatoren E2 sind Natrium-, Kalium- und Ammoniumsalze von geradkettigen aliphatischen Carbonsäuren der Kettenlänge C₁₂-C₂₀, Natriumhydroxyoctadecansulfonat, Natrium-, Kalium- und Ammoniumsalze von Hydroxyfettsäuren der Kettenlänge C₁₂-C₂₀ und deren Sulfonierungs- bzw. Sulfatierungs- und/oder Acetylierungsprodukte, Alkylsulfate, auch als Triethanolaminsalze, Alkyl-(C₁₀-C₂₀)-sulfonate, Alkyl(C₁₀-C₂₀)-arylsulfonate Dimethyldialkyl(C₈-C₁₈)-amrnoniumchlorid, und ihre Sulfierungsprodukte, Lignin-sulfonsäure sowie deren Calcium-, Magnesium-, Natrium- und Ammoniumsalze, Harzsäuren, hydrierte und dehydrierte Harzsäuren sowie deren Alkalisalze, dodecyliertes Diphenyletherdisulfonsaures Natrium, Natriumlaurylsulfat, ethoxyliertes Natriumlaurylethersulfat (EO-Grad 3) oder ein Salz eines Bisesters, vorzugsweise eines Bis-C₄-C₁₈-Alkylesters, einer sulfonierten Dicarbonsäure mit 4 bis 8 Kohlenstoffatomen oder ein Gemisch dieser Salze, vorzugsweise sulfonierte Salze von Estern der Bernsteinsäure, besonders bevorzugt um Salze, wie Alkalimetallsalze, von Bis-C₄-C₁₈-Alkylestern sulfonierter Bernsteinsäure.

An anionischen Emulgatoren E2 werden typischerweise 0,1 bis 3,0 Gew.%, vorzugsweise 0,1 bis 2,0 Gew.%, besonders bevorzugt 0,5 bis 1,5 Gew. %, bezogen auf das Polymere, verwendet. Es lassen sich auch Gemische von anionischen Emulgatoren einsetzen.

Es lassen sich auch Gemische von nichtionischen und anionischen Emulgatoren einsetzen. Der Gewichtsanteil von Emulgatoren E1 zu E2 kann in weiten Bereichen schwanken, beispielsweise zwischen 50:1 und 1:1.

Zusätzlich zu den während der Emulsionspolymerisation eingesetzten Emulgatoren und gegebenenfalls Schutzkolloiden können die erfindungsgemäß eingesetzten Vinylesterpolymerdispersionen noch nachträglich zugesetzte wasserlösliche oder wasserdispergierbare Polymere und/oder nachträglich zugesetzte Emulgatoren enthalten.

Typischerweise beträgt der Gesamtanteil an Emulgatoren, bezogen auf das Polymere, 0,5 bis 7 Gew.%, vorzugsweise 1 bis 6,0 Gew.%, besonders bevorzugt 1 bis 5 Gew. %.

Neben Emulgatoren können die erfindungsgemäß eingesetzten Vinylesterpolymerdispersionen Schutzkolloide, vorzugsweise Polyvinylalkohole und/oder deren Modifikationen, enthalten. Schutzkolloide - falls anwesend - liegen in der Regel nur in vergleichsweise geringen Konzentrationen vor, beispielsweise in bis zu 2 Gew. %, bezogen auf die Gesamtmenge der eingesetzten Monomeren. Vorzugsweise enthalten die erfindungsgemäß eingesetzten Vinylesterpolymerdispersionen keine oder bis zu 1 Gew. %, bezogen auf die Gesamtmenge der eingesetzten Monomeren, an Schutzkolloiden.

Bei den Schutzkolloiden handelt es sich um wasserlösliche oder wasserdispergierbare Polymere, die während der Emulsionspolymerisation anwesend sind und die entstehende Dispersion stabilisieren. Emulgatoren sind niedermolekulare Verbindungen, welche die Emulsion sowie das entstandene Produkt stabilisieren.

Beispiele für Schutzkolloide sind wasserlösliche oder wasserdispergierbare polymere modifizierte Naturstoffe, wie Celluloseether, z.B. Methyl-, Ethyl-, Hydroxyethyl- oder Carboxymethylcellulose; wasserlösliche oder wasserdispergierbare polymere synthetische Substanzen, wie Polyvinylalkohole oder deren Copolymere (mit oder ohne Restacetylgehalt), teilweise veresterter oder acetalisierter oder mit gesättigten Resten veretherter Polyvinylalkohol.

Die Schutzkolloide können einzeln oder in Kombination eingesetzt werden. Im Falle von Kombinationen unterscheiden sie sich jeweils in ihren Molekulargewichten oder sie unterscheiden sich in ihren Molekulargewichten und ihrer chemischen Zusammensetzung wie zum Beispiel dem Hydrolysegrad.

Im Falle von Polyvinylalkohol als Schutzkolloid wird anstelle der Angabe des Molekulargewichts vorzugsweise die Viskosität einer 4 %-igen wässrigen Lösung bei 25°C (gemessen mit dem Höppler Viskosimeter) angegeben.

Besonders geeigneter Polyvinylalkohol besitzt vorzugsweise einen Verseifungsgrad von 70 bis 100 mol % und/oder dessen wässrige Lösung besitzt eine Viskosität bei 25°C von 2 bis 60 mPa*s.

Diese und folgende Viskositätsangaben beziehen sich jeweils auf Messungen mit dem Höppler-Viskosimeter.

Weitere geeignete Polyvinylalkohole können in irgendeiner Art hydrophob bzw. hydrophil modifiziert worden sein.

Gegebenenfalls enthalten die erfindungsgemäß eingesetzten wässrigen Vinylesterpolymerdispersionen noch weitere für die Formulierung von Dispersionsklebern an sich übliche Zusätze:

Dazu zählen beispielsweise Filmbildehilfsmittel, wie Testbenzin, Texanol^{®}, TxiB^{®}, Butylglykol, Butyldiglykol, Butyldipropylenglykol und Butyltripropylenglykol; Weichmacher, wie Dimethylphthalat, Disobutylphthalat, Adipinsäurediisobutylester, Coasol B^{®}, Plastilit 3060^{®} und Triazetin®; Netzmittel, wie AMP 90^{®}, TegoWet.280^{®} Fluowet PE^{®}; Verdicker, wie Polyacrylate oder Polyurethane, wie Borchigel L75^{®} und Tafigel PUR 60^{®}; Entschäumer, z.B. Mineralöl- oder Silikonentschäumer; UV-Schutzmittel, wie Tinuvin 1130^{®}, nachträglich zugesetzte stabilisierenden Polymere, wie Polyvinylalkohol oder Celluloseether, und andere Additive und Hilfsmittel, wie sie zur Formulierung von Klebstoffen üblich sind verwendet werden.

Der Anteil dieser Zusätze im erfindungsgemäß eingesetzten Dispersionsklebstoff kann bis zu 25 Gew.-%, vorzugsweise 2 bis 15 Gew. %, und insbesondere 5 bis 10 Gew. %, bezogen auf die Dispersion, betragen.

Die erfindungsgemäß eingesetzten Vinylesterpolymerdispersionen werden durch radikalische Emulsionspolymerisation von wenigstens einem Vinylestermonomeren und gegebenenfalls weiteren mindestens eine ethylenisch ungesättigte Gruppe aufweisenden Monomeren in Gegenwart mindestens eines Emulgators hergestellt. Beispiele dafür sind oben aufgezählt.

Die Herstellung wässriger Polymerdispersionen ist vielfach vorbeschrieben und dem Fachmann daher bekannt [vgl. z.B. Encyclopedia of Polymer Science and Engineering, Vol. 8, S. 659 ff (1987)].

In der Regel erfolgt der Zusatz der Monomeren durch kontinuierlichen Zulauf; es kann aber auch ein großer Teil der Monomeren, z.B. bis zu 70 Gew. %, vorgelegt werden.

Die Polymerisation kann auch in an sich bekannter Weise in mehreren Stufen mit unterschiedlichen Monomerkombinationen erfolgen, wobei Polymerdispersionen mit Teilchen heterogener Morphologie entstehen.

Die Polymerisation der ethylenisch ungesättigten Monomeren erfolgt in Gegenwart mindestens eines Initiators für die radikalische Polymerisation der ethylenisch ungesättigten Monomeren.

Als Initiatoren für die radikalische Polymerisation zum Starten und Weiterführen der Polymerisation während der Herstellung der Dispersionen kommen alle bekannten Initiatoren in Betracht, die in der Lage sind, eine radikalische, wässrige Polymerisation in Heterophasensystemen zu starten.

Es kann sich dabei um Peroxide, wie z.B. Alkalimetall- und/oder Ammoniumperoxodisulfate oder um Azoverbindungen, insbesondere um wasserlösliche Azoverbindungen, handeln.

Als Polymerisationsinitiatoren können auch sogenannte Redoxinitiatoren verwendet werden. Beispiele dafür sind tert.-Butylhydroperoxid und/öder Wasserstoffperoxid in

Kombination mit Reduktionsmitteln, wie mit Schwefelverbindungen, z.B. dem Natriumsalz der Hydroxymethansulfinsäure, Brüggolit^{®} FF6 und FF7, Rongalit^{®}C, Natriumsulfit, Natriumdisulfit, Natriumthiosulfat und Acetonbisulfitaddukt, oder mit Ascorbinsäure oder mit reduzierenden Zuckern.

Die Menge der im Verfahren eingesetzten Initiatoren oder Kombinationen von Initiatoren bewegt sich im Rahmen der für wässrige Polymerisationen in Heterophasensystemen üblich ist. In der Regel wird die Menge des eingesetzten Initiators 5 Gew. %, bezogen auf die Gesamtmenge der zu polymerisierenden Monomeren, nicht überschreiten.

Vorzugsweise beträgt die Menge der eingesetzten Initiatoren, bezogen auf die Gesamtmenge der zu polymerisierenden Monomeren, 0,05 bis 2,0 Gew. %.

Dabei kann die Gesamtmenge an Initiator bereits zu Beginn der Polymerisation vorgelegt werden oder bevorzugt wird ein Teil des Initiators zu Beginn vorgelegt und der Rest wird nach dem Starten der Polymerisation in ein oder mehreren Schritten oder kontinuierlich zugegeben. Die Zugabe kann getrennt erfolgen oder zusammen mit anderen Komponenten, wie Emulgatoren.

Das Molekulargewicht der Polymerisate der wässrigen Vinylesterpolymerdispersionen kann durch Zugabe geringer Mengen einer oder mehrerer das Molekulargewicht regelnder Substanzen eingestellt werden. Diese sogenannten Regler werden im allgemeinen in einer Menge von bis zu 2 Gew. %, bezogen auf die zu polymerisierenden Monomeren, eingesetzt. Als Regler können alle dem Fachmann bekannten Substanzen eingesetzt werden. Bevorzugt sind z.B. organische Thioverbindungen, Silane, Allylalkohole und Aldehyde.

Darüber hinaus kann die wässrige Vinylesterpolymerdispersion noch eine Reihe weiterer Substanzen, wie zum Beispiel Weichmacher, Konservierungsmittel, Mittel zum Einstellen des pH-Wertes und/oder Entschäumer enthalten.

Die Polymerisationstemperatur beträgt im allgemeinen 20 bis 150 °C und bevorzugt 50 bis 100°C.

Die Polymerisation findet gegebenenfalls unter Druck statt, bevorzugt 10 - 150 bar, besonders bevorzugt 30 bis 95 bar.

Im Anschluss an die eigentliche Polymerisationsreaktion kann es wünschenswert und/oder erforderlich sein, die erhaltene wässrige Vinylesterpolymerdispersion weitgehend frei von Geruchsträgern, wie z.B. Restmonomeren und anderen flüchtigen, organischen Bestandteilen zu gestalten. Dies kann in an sich bekannter Weise beispielsweise physikalisch durch destillative Entfernung (insbesondere über Wasserdampfdestillation) oder durch Abstreifen mit einem inerten Gas erreicht werden. Ferner kann die Absenkung der Restmonomeren auch chemisch durch radikalische Nachpolymerisation, insbesondere durch Einwirkung von Redoxinitiatorsystemen, wie sie z.B. in der DE-A-4,435,423 beschrieben sind, erfolgen. Bevorzugt ist eine Nachpolymerisation mit einem Redoxinitiatorsystem aus mindestens einem organischen Peroxid sowie einem organischen und/oder anorganischen Sulfit und/oder Sulfinsäurederivaten.

Besonders bevorzugt ist eine Kombination aus physikalischen und chemischen Methoden, wobei nach einer Absenkung des Restmonomer-Gehaltes durch chemische Nachpolymerisation die weitere Absenkung des Restmonomergehaltes mittels physikalischer Methoden auf vorzugsweise <2000 ppm, besonders bevorzugt <1000 ppm, insbesondere <100 ppm erfolgt.

Die Polymerisation wird üblicherweise bei einem pH-Wert im Bereich von kleiner / gleich 9 durchgeführt. Zur Einstellung des pH-Wertes der Vinylesterpolymerdispersion können prinzipiell Puffersysteme, wie beispielsweise Natriumacetat oder Phosphatpuffersysteme, verwendet werden.

Bevorzugt ist ein pH-Bereich von 2 bis 9 günstig, bevorzugt ist ein pH-Wert im Bereich zwischen 3 und 8.

Der Feststoffgehalt der erfindungsgemäß eingesetzten Polyvinylestedispersionen liegt bei mindestens 40 Gew. %, vorzugsweise zwischen 45 und 60 Gew. %, und besonders bevorzugt zwischen 50 und 55 %. Die Gewichtsangaben beziehen sich dabei auf die Gesamtmasse der Dispersion.

Die Erfindung betrifft auch die Verwendung der oben beschriebenen Polyvinylesterdispersion zur Düsenapplikation in form eines dünnen Strahls oder von Abschnitten von dünner Strahlen auf Substrate.

Der Auftrag kann dabei in diskreten flächigen Abschnitten erfolgen oder vorzugsweise punktuell oder strichförmig.

Bevorzugt werden die Dispersionsklebstoffe zur Verklebung von Papier oder beschichtetem Papier in der Fließbandfertigung von Faltschachteln, Briefumschlägen, Prospekten und Zigaretten eingesetzt, wobei insbesondere Papier-Papier-Verklebungen (beschichtet und unbeschichtet) oder Papier-Kunststofffolien-Verklebungen hergestellt werden.

Diese Verwendungen sind ebenfalls Gegenstand der vorliegenden Erfindung.

Die nachfolgenden Beispiele erläutern die Erfindung ohne diese zu begrenzen.

### Messmethoden

### Messung der Partikelgrößenverteilung

Die Messung der Partikelgrößenverteilung wurde mit Hilfe des Laserbeugungsgerätes Mastersizer Micro Plus der Firma Malvern durchgeführt. Zur Auswertung der Streudaten wurde die von Malvern zur Verfügung gestellte volumengemittelte "polydisperse Mie"-Auswertung verwendet.

### Glasübergangstemperatur

Die Messung der Glasübergangstemperatur wurde mit einem Mettler DSC 820 bei 20 K/min durchgeführt. Ausgewertet wurde die zweite Aufheizkurve.

### Beispiel 1: Herstellung einer Polymerdispersion mit heterogener Morphologie

In einer Druckapparatur mit Rührer, Mantelheizung und Dosierpumpen wurde eine wäßrige Lösung, bestehend aus folgenden Bestandteilen vorgelegt:

| | |
|---|---|
| 24937 g | E-Wasser (entionisiertes Wasser) |
| 1173 g | Celvol^{®} 523 Lösung (15 %ig in E-Wasser, Polyvinylalkohol von Celanese) |
| 85 g | Natriumacetat (wasserfrei) |
| 591 g | Natriumethensulfonat (30 %ig) |
| 1478 g | Emulsogen^{®} EPN 287 (70 %ig in E-Wasser, nichtionischer Emulgator auf Basis eines Ethoxylats von Clariant) |
| 1150 g | Texapon^{®} K 12/15 (15 %ig in E-Wasser, Natriumdodecylsulfat von Cognis) |
| 13,4 g | Natriumdisulfit |
| 8 g | Mohrsches Salz |

Der Polyvinylalkohol wurde zuvor je in einer 15 %igen Lösung bei 90 °C 2 Stunden lang gelöst. Die Apparatur wurde von Luftsauerstoff befreit. 5 % der Vinylacatatmenge (Gesamtmenge: 28972 g) wurde in den Reaktor dosiert. Das Ethylenventil wurde geöffnet und 6,8 % Ethylen (Gesamtmenge 5519 g) aufgedrückt. Gleichzeitig wurde die Temperatur auf 65 °C erhöht. Bei 55 °C wurde der Initiator 1 (71 g Natriumperoxodisulfat in 710 g E-Wasser) schnell hinzudosiert. Wenn die 65 °C erreicht waren, wurden 27,5 % Vinylacetat in 60 Minuten und 67,5 % Vinylacetat in 300 Minuten hinzudosiert. Nach 105 Minuten der Vinylacetatdosierung wurde der Ethylendruck innerhalb 60 Minuten auf 50 bar erhöht. Wenn die Gesamtmenge Ethylen im Reaktor war, wurde das Ethylenventil geschlossen. Nach 310 Minuten wurde der Ansatz innerhalb 50 Minuten auf 85 °C aufgeheizt und 1 Stunde bei dieser Temperatur gehalten. Während des Aufheizens wurde während der 50 Minuten eine Initiatorlösung 2 (34,5 g Natriumperoxodisulfat in 1183 g E-Wasser) hinzudosiert. Anschließend wurde der Ansatz abgekühlt. Anschließend wurde noch eine Redoxbehandlung und/oder eine physikalische Behandlung zur Reduzierung der Restmonomeren durchgeführt.

### Charakteristische Daten der Beispieldispersion 1

| | |
|---|---|
| Trockensubstanz: | 55 % |
| pH (Elektrodenmessung): | 5 |
| Viskosität nach Brookfield (23 °C, Spindel 5, 20 rpm): | 6400 mPas |
| Restmonomergehalt: | < 0,2 % |
| Glasübergangstemperatur des Polymerisats (20 K/min); | 2 Stufen: -4 und 21 °C |
| Teilchengrößenverteilung (Mastersizer^{®}, polydispers, Mie): | d_{w} = 340 nm d_{w}/dₙ == 1,13 |

### Beispiel 2: Herstellung einer homogen Polymerdispersion

In einer Druckapparatur mit Rührer, Mantelheizung und Dosierpumpen wurde eine wäßrige Lösung, bestehend aus folgenden Bestandteilen vorgelegt:

| | |
|---|---|
| 25176 | g E-Wasser (entionisiertes Wasser) |
| 1173 g | Celvol^{®} 523 Lösung (15 %ig in E-Wasser, Polyvinylalkohol von Celanese) |
| 85 g | Natriumacetat (wasserfrei) |
| 591 g | Natriumethensulfonat (30 %ig) |
| 1478 g | Emulsogen^{®} EPN 287 (70 %ig in E-Wasser, nichtionischer Emulgator auf Basis eines Ethoxylats von Clariant) |
| 1150 g | Texapon^{®} K 12/15 (15 %ig in E-Wasser, Natriumdodecylsulfat von Cognis) |
| 13,4 g | Natriumdisulfit |
| 8 g | Mohrsches Salz |

Der Polyvinylalkohol wurde zuvor je in einer 15 %igen Lösung bei 90 °C 2 Stunden lang gelöst. Die Apparatur wurde von Luftsauerstoff befreit. 7 % der Vinylacetatmenge (Gesamtmenge: 28974 g) wurde in den Reaktor dosiert. Das Ethylenventil wurde geöffnet und auf 50 bar eingestellt (Gesamtmenge: 5519 g). Gleichzeitig wurde die Temperatur auf 65 °C erhöht. Bei 60 °C und 45 bar Ethylendruck wurde der Initiator 1 (71 g Natriumperoxodisulfat in 474 g E-Wasser) schnell hinzudosiert. Wenn die 65 °C erreicht waren, wurden 27,5 % Vinylacetat in 60 Minuten und 67,5 % Vinylacetat in 300 Minuten hinzudosiert. Wenn die Gesamtethylenmenge im Reaktor war, wurde das Ethylenventil geschlossen. Nach 310 Minuten wurde der Ansatz innerhalb 50 Minuten auf 85 °C aufgeheizt und 1 Stunde bei dieser Temperatur gehalten. Während des Aufheizens wurde während der 50 Minuten eine Initiatorlösung 2 (34,5 g Natriumperoxodisulfat in 1183 g E-Wasser) hinzudosiert. Anschließend wurde der Ansatz abgekühlt. Anschließend wurde noch eine Redoxbehandlung und/oder eine physikalische Behandlung zur Reduzierung der Restmonomeren durchgeführt.

### Charakteristische Daten der Beispieldispersion 2

| | |
|---|---|
| Trockensubstanz: | 54 % |
| pH .(Elektrodenmessung): | 4 |
| Viskosität nach Brookfield (23 °C, Spindel 5, 20 rpm): | 6500 mPas |
| Restmonomergehalt: | < 0,2 % |
| Glasübergangstemperatur des Polymerisats (20 K/min): | 4 °C |
| Teilchengrößenverteilung (Mastersizer^{®}, polydispers, Mie): | d_{w} = 410 nm d_{w}/dₙ = 2,16 |

### Beispiel 3: Herstellung einer weiteren homogen Polymerdispersion

Es wurde wie in Beispiel 2 gearbeitet, allerdings ohne Zusatz von Polyvinylalkohol.

### Charakteristische Daten der Beispieldispersion 3

| | |
|---|---|
| Trockensubstanz: | 54 % |
| pH (Elektrodenmessung): | 4 |
| Viskosität nach Brookfield (23 °C, Spindel 5, 20 rpm): | 4500 mPas |
| Restmonomergehalt: | < 0,2 % |
| Glasübergangstemperatur des Polymerisats (20 K/min): | 4 °C |
| Teilchengrößenverteilung (Mastersizer^{®}, polydispers, Mie): | d_{w}= 370 nm d_{w}/dₙ = 1, 50 |

### Beispiel 4 (Vergleich)

Handelsübliche VAE (Vinylacetat-Ethylen) Dispersion, die mit Polyvinylalkohol stabilisiert ist.

| | |
|---|---|
| Charakteristische Daten der Vergleichsdispersion 4 Trockensubstanz: | 55 % |
| pH (Elektrodenmessung): | 4 |
| Viskosität nach Brookfield (23 °C, Spindel 5, 20 rpm): | 4000 mPas |
| Restmonomergehalt: | < 0,2 % |
| Glasübergangstemperatur des Polymerisats (20 K/min): | 7 °C |
| Teilchengrößenverteilung (Mastersizer, polydispers, Mie): | d_{w} = 860 nm d_{w}/dₙ = 2,26 |

### Beispiel 5: Anwendung an der Düse und Klebstoffeigenschaften

### 1. Aufbau

Die Applikation auf ein schnelllaufendes Förderband wurde im Labor durch Applikation auf eine schnelldrehende Edelstahlwalze simuliert. Die Walze hatte einen Durchmesser von ca. 26 cm und wurde mit einer Geschwindigkeit von 100 m/min gedreht. Senkrecht über der Walze befand sich eine Vorrichtung mit 3 Leimauftragsdüsen. Diese wurden mittels eines Schlauchleitungssystems über eine Kolbenpumpe (Druck 5-40 bar, in den Versuchen wurden 10 bar verwendet) mit dem Klebstoff versorgt. Der Abstand zwischen der Düse und der Walze betrug 4 mm. Die Leimauftragsdüsen (z. B. hhs, D-Ventil) wurden über ein elektronisches Steuerungsgerät angesteuert. Es wurde das Profil einer Seitennahtverklebung einer Faltschachtel mit 12 cm Länge simuliert. Es wurden 12 Leimpunkte in einer Reihe aufgetragen. Die Öffnungsdauer des Ventils betrugt 4 ms und die geschlossene Zeit zwischen 2 Punkten betrug 2 ms. Die Gesamtdauer einer Reihe mit insgesamt 12 Leimpunkten war somit 70 ms.

Eine Sequenz bestand aus 4 Reihen, bei der zwischen den einzelnen Reihen eine Pause von 55,3 ms herrschte (zur Simulation des Abstands zwischen 2 Substraten auf dem Förderband). Zwischen 2 Sequenzen bestand eine Pause von 165,6 ms.

Dieses Profil wurde über einen Zeitraum von 2 Stunden gefahren und im Abstand von 15 min. wurde mittels digitaler Bildanalyse der zapfenförmige Aufbau an der Düse gemessen. Die Dispersion wurde für diese Messungen soweit verdünnt, daß sie eine Viskosität von 1000 mPas zeigte. Das Ergebnis ist der Aufbau in mm über die Zeit in Minuten.

### 2. Tailing

Das Tailing wurde durch digitale Bildanalyse der auf die Edelstahlwalze applizierten Tropfen mittels einer Hochgeschwindigkeitskamera bestimmt. Die Applikation bei diesem Experiment lief im Prinzip analog wie unter 1 beschrieben, nur war die Laufgeschwindigkeit der Walze 250 m/min und der Abstand der Düse zur Walze Betrug 10mm. Die Taktsequenz der Düse betrug für einen Leimpunkt 4 ms und zwischen 2 Leimpunkten 3,4 ms . Das Ergebnis gibt den in Längsrichtung ausgemessenen Tropfen vom "Kopf bis zum "Schwanz" an.

### 3. Manuelle Abbindegeschwindigkeit

3.1 Auf der satinierten Seite eines auf 40 cm Länge und 10 cm Breite zugeschnittenen Kartons, z.B. GD1 Juwel Top (250 g/m²), der mit einer cm Skalierung versehen wurde, wird mit Hilfe eines Spaltrakels (50 µm Naßfilm) der Klebstoff aufgetragen.
3.2 Direkt nach dem Aufziehen des Klebstoffes wurde ein auf 55 cm Länge und 5 cm Breite zugeschnittener Papierstreifen, z.B. Natronkraftpapier (80 g/m²), auf den Klebstofffilm gelegt und durch Anpressen mittels einer Handrolle verklebt.
3.3 Unmittelbar nach Fertigstellung der Verklebung wurde der Papierstreifen per Hand in einer Geschwindigkeit von 1 cm/s von dem Karton abgeschält bis es zu einem deutlich sichtbaren Faserausriß kam.
3.4 Durch die vorgenommene Skalierung des Kartonstreifens war es nun möglich, die zurückgelegte Strecke bis zum Beginn des Faserausrisses mit einer Zeit zu korrelieren (1 cm entspricht 1 s). Dieser Wert entsprach der Abbindezeit des Klebstoffes und wurde angegeben.

**Tabelle 1: Ergebnisse**

| Dispersion aus Beispiel | Verhalten an der Düse | | Klebstoffeigenschaften | Teilchengrößenverteilung | |
|---|---|---|---|---|---|
| | Aufbau (mm/h) | Tailing (mm) | Manuelle Abbindegeschwindigkeit (s) | d_{w} (nm) | d_{w}/dₙ |
| 1 (erfindungsgemäß) | 0 (nach 120 min) | 13,7 | 20 | 340 | 1,13 |
| 2 (efindungsgemäß) | 0 (nach 120 min) | 14,0 | 19 | 410 | 2,16 |
| 3 (erfindungsgemäß) | 0 (nach 120 min) | 13,8 | 18 | 370 | 1,50 |
| 4 (Vergleich) | 4 (Düse verstopft) | 14,6 | 18 | 860 | 2,26 |

Die erfindungsgemäßen Beispiele 1, 2 und 3 zeigten an der Düse praktisch keinen Aufbau, hingegen war hatte der Aufbau bei der Referenzdispersion nach 1 Stunde bereits die maximale Länge von 4 mm erreicht und berührte die Walze. Das Tailing ist vergleichbar. Die Klebstoffeigenschaften sind in den erfindungsgemäßen Beispielen nicht beeinträchtigt und vergleichbar gut mit handelsüblichen VAE Dispersionen.

## Patentansprüche

1. Auftragsverfahren für Dispersionsklebstoffe durch Düsen auf ein Substrat, worin der Düse eine wässrige, durch Emulgatoren stabilisierte Vinylesterpolymerdispersion mit einem Feststoffgehalt von mindestens 40 Gew. %, einer Viskosität von kleiner 8000 mPas zugeführt wird und von der Düse in Form eines dünnen Strahls oder von Abschnitten von dünnen Strahlen auf das Substrat aufgetragen wird, wobei das Vinylesterpolymere eine Glasübergangstemperatur, bestimmt durch DSC Messung mit einer Aufheizgeschwindigkeit von 10 K/Minute, von -30 bis +40 °C aufweist.

2. Auftragsverfahren nach Anspruch 1, **dadurch gekennzeichnet, dass** das. Substrat flächig und gleichzeitig flexibel ist und dass Verklebungen auf der Basis von Papier/Papier oder von PapierlKunststofffolie hergestellt werden.

3. Auftragsverfahren nach Anspruch 1, **dadurch gekennzeichnet, dass** das Vinylesterpolymere der Polymerdispersion eine Glasübergangstemperatur von -30 bis +15 °C aufweist.

4. Auftragsverfahren nach Anspruch 1, **dadurch gekennzeichnet, dass** die Polyvinylesterdispersion eine Viskosität von 200 bis 4000 mPas aufweist.

5. Auftragsverfahren nach Anspruch 1, **dadurch gekennzeichnet, dass** die wässrige Polyvinylesterdispersion mindestens ein Vinylester-Copolymer enthält, das durch Emulsionspolymerisation mindestens eines Vinylesters einer aliphatischen Carbonsäure und mindestens eines damit copolymerisierbaren Monomers in Gegenwart mindestens eines nichtionischen Emulgators mit Alkylenoxidgruppen und/oder mindestens eines anionischen Emulgators mit Sulfat-, Sulfonat-, Phosphat- und/oder Phosphonatgruppen und gegebenenfalls in Gegenwart eines molekular oder dispers in Wasser löslichen Polymeren erhalten wurde.

6. Auftragsverfahren nach Anspruch 1, **dadurch gekennzeichnet, dass** die wässrige Polyvinylesterdispersion mindestens ein Vinylester-Copolymer enhält, das durch Emulsionspolymerisation mindestens eines Vinylesters einer aliphatischen Carbonsäure und mindestens eines damit copolymerisierbaren Monomers in Gegenwart mindestens eines nichtionischen Emulgators und/oder mindestens eines anionischen Emulgators und 0 bis 2 Gew. %, bezogen auf die Gesamtmenge der Monomeren, mindestens eines Polyvinylalkohols erhalten wurde.

7. Auftragsverfahren nach Anspruch 1, **dadurch gekennzeichnet, dass** die wässrige Polyvinylesterdispersion mindestens ein Vinylestercopolymer enthält, das sich ableitet von
A1) Vinylestern von aliphatischen, gesättigten Carbonsäuren mit einer Kettenlänge von C₁-C₄,
A2) alpha-Olefinen mit 2 bis 8 C-Atomen, und/oder
A3) Vinylestern von aliphatischen, gesättigten Carbonsäuren mit einer Kettenlänge von C₅-C₁₈,
A4) gegebenenfalls Estern von ethylenisch ungesättigten Mono- oder Dicarbonsäuren, sowie
A5) gegebenenfalls weiteren Comonomeren,
wobei die Summe der Monomeren der Typen A1, A2 und/oder A3 und/oder gegebenenfalls A4 und/oder gegebenenfalls A5 100 Gew.-% ergeben.

8. Auftragsverfahren nach Anspruch 7, **dadurch gekennzeichnet, dass** Monomere des Typs A1 Vinylacetat ist.

9. Auftragsverfahren nach Anspruch 7, **dadurch gekennzeichnet, dass** das Vinylestercopolymere sich ableitet von Monomeren des Typs A1, A2 und gegebenenfalls A4 und daß das Monomer des Typs A2 Ethylen ist.

10. Auftragsverfahren nach Anspruch 9, **dadurch gekennzeichnet, dass** das Vinylestercopolymere ein Vinylacetat-Ethylen-Copolymeres oder ein mit Acrylatmonomeren und/oder mit Dialkylmaleinat modifiziertes Vinylacetat-Ethylen-Copolymeres ist.

11. Auftragsverfahren nach Anspruch 7, **dadurch gekennzeichnet, dass** das Vinylestercopolymere sich ableitet von Monomeren des Typs A1, A3 und gegebenenfalls A4 und daß das Monomere des Typs A3 ein Vinylester von αverzweigten Carbonsäuren mit 9 bis 11 Kohlenstoffatomen im Säurerest ist.

12. Auftragsverfahren nach Anspruch 1, **dadurch gekennzeichnet, dass** die eingesetzte wässrige Vinylesterpolymerdispersion neben dem Emulgator bis zu 2 Gew. %, bezogen auf die Gesamtmonomermenge, eines Schutzkolloids aus einem wasserlöslichen oder wasserdispergierbaren Polymeren enthält.

13. Auftragsverfahren nach Anspruch 1, **dadurch gekennzeichnet, dass** die eingesetzte wässrige Vinylesterpolymerdispersion nichtionische Emulgatoren enthält, die ausgewählt werden aus der Gruppe der Acyl-, Alkyl-, Oleyl- und Alkylaryloxethylate.

14. Auftragsverfahren nach Anspruch 1, **dadurch gekennzeichnet, dass** die eingesetzte wässrige Vinylesterpolymerdispersion anionische Emulgatoren enthält, die ausgewählt werden aus der Gruppe der Natrium-, Kalium- und Ammoniumsalze von geradkettigen aliphatischen Carbonsäuren der Kettenlänge C₁₂-C₂₀, des Natriumhydroxyoctadecansulfonats, der Natrium-, Kalium- und Ammoniumsalze von Hydroxyfettsäuren der Kettenlänge C₁₂-C₂₀ und deren Sulfonierungs-, Sulfatierungs- und/oder Acetylierungsprodukten, der Alkylsulfate, gegebenenfalls vorliegend als Triethanolaminsalze, derAlkyl-(C₁₀-C₂₀)-sulfonate, der Alkyl(C₁₀-C₂₀)-arylsulfonate, des Dimethyldialkyl(C₈-C₁₈)-ammoniumchlorids, und deren Sulfierungsprodukten, der Ligninsulfonsäure sowie deren Calcium-, Magnesium-, Natrium- und Ammoniumsalze, der Harzsäuren, der hydrierten und dehydrierten Harzsäuren sowie deren Alkalisalzen, des dodecylierten Diphenyletherdisulfonsauren Natriums, des Natriumlaurylsulfats, des ethoxylierten Natriumlaurylethersulfats mit einem EO Grad von 3-7 oder des Salzes eines Bisesters, einer sulfonierten Dicarbonsäure mit 4 bis 8 Kohlenstoffatomen oder eines Gemisches dieser Salze.

15. Auftragsverfahren nach Anspruch 1, **dadurch gekennzeichnet, dass** der Strahl aus der Düse einen Durchmesser von kleiner als 6 mm aufweist.

16. Verwendung von wässrigen, durch Emulgatoren stabilisierten Polyvinylesterdispersionen mit einem Feststoffgehalt von mindestens 40 Gew. % und einer Viskosität von kleiner als 8000 mPas, deren Polymer eine Glasübergangstemperatur von -30 bis + 40 °C aufweist, zur Düsenapplikation in Form eines dünnen Strahls oder von Abschnitten von dünnen Strahlen auf Substrate.

17. Verwendung nach Anspruch 16, **dadurch gekennzeichnet dass** der Auftrag in diskreten flächigen Abschnitten oder punktuell oder strichförmig erfolgt.

18. Verwendung nach Anspruch 16, **dadurch gekennzeichnet dass** die wässrigen Polyvinylesterdispersionen nichtionische Emulgatoren mit Alkylenoxidgruppen und/oder anionische Emulgatoren mit Sulfat-, Sulfonat-, Phosphat- und/oder Phosphonatgruppen enthalten.

19. Verwendung nach Anspruch 16, **dadurch gekennzeichnet, dass** die Düsenapplikation zur Verklebung von Papier, von Faltschachteln, UV-lackierten Faltschachteln, von Briefumschlägen, von Prospekten und von Zigaretten eingesetzt wird.

## Claims

1. An application process for a dispersion-based adhesive through nozzles to a substrate, wherein an aqueous, emulsifier-stabilized vinyl ester polymer dispersion having a solids content of at least 40% by weight and a viscosity of less than 8000 mPas is supplied to the nozzle and is applied from the nozzle, in the form of a thin jet or from sections of thin jets, to the substrate, the vinyl ester polymer having a glass transition temperature, determined by DSC measurement with a heating rate of 10 K/minute, of -30 to +40°C.

2. The application process as claimed in claim 1, wherein the substrate is two-dimensional and at the same time flexible, and wherein adhesive bonds on the basis of paper/paper or of paper/polymeric film are produced.

3. The application process as claimed in claim 1, wherein the vinyl ester polymer of the polymer dispersion has a glass transition temperature of -30 to +15°C.

4. The application process as claimed in claim 1, wherein the polyvinyl ester dispersion has a viscosity of 200 to 4000 mPas.

5. The application process as claimed in claim 1, wherein the aqueous polyvinyl ester dispersion comprises at least one vinyl ester copolymer obtained by emulsion polymerization of at least one vinyl ester of an aliphatic carboxylic acid and at least one monomer copolymerizable therewith, in the presence of at least one nonionic emulsifier having alkylene oxide groups and/or of at least one anionic emulsifier having sulfate, sulfonate, phosphate and/or phosphonate groups, and, if desired, in the presence of a molecularly or dispersely water-soluble polymer.

6. The application process as claimed in claim 1, wherein the aqueous polyvinyl ester dispersion comprises at least one vinyl ester copolymer obtained by emulsion polymerization of at least one vinyl ester of an aliphatic carboxylic acid and at least one monomer copolymerizable therewith, in the presence of at least one nonionic emulsifier and/or of at least one anionic emulsifier and 0% to 2% by weight, based on the total amount of the monomers, of at least one polyvinyl alcohol.

7. The application process as claimed in claim 1, wherein the aqueous polyvinyl ester dispersion comprises at least one vinyl ester copolymer which derives from
A1) vinyl esters of aliphatic, saturated carboxylic acids having a chain length of C₁-C₄,
A2) alpha-olefins having 2 to 8 carbon atoms, and/or
A3) vinyl esters of aliphatic, saturated carboxylic acids having a chain length of C₅-C₁₈,
A4) if desired, esters of ethylenically unsaturated monocarboxylic or dicarboxylic acids, and also
A5) if desired, further comonomers,
the sum of the monomers of types A1, A2 and/or A3 and/or, if desired, A4 and/or, if desired, A5 making 100% by weight.

8. The application process as claimed in claim 7, wherein monomer of type A1 is vinyl acetate.

9. The application process as claimed in claim 7, wherein the vinyl ester copolymer derives from monomers of type A1, A2 and, if desired, A4 and wherein the monomer of type A2 is ethylene.

10. The application process as claimed in claim 9, wherein the vinyl ester copolymer is a vinyl acetate-ethylene copolymer or a vinyl acetate-ethylene copolymer modified with acrylate monomers and/or with dialkyl maleate.

11. The application process as claimed in claim 7, wherein the vinyl ester copolymer derives from monomers of type A1, A3 and, if desired, A4 and wherein the monomer of type A3 is a vinyl ester of α-branched carboxylic acids having 9 to 11 carbon atoms in the acid radical.

12. The application process as claimed in claim 1, wherein the aqueous vinyl ester polymer dispersion used comprises, in addition to the emulsifier, up to 2% by weight, based on the total monomer amount, of a protective colloid composed of a water-soluble or water-dispersible polymer.

13. The application process as claimed in claim 1, wherein the aqueous vinyl ester polymer dispersion employed comprises nonionic emulsifiers selected from the group of acyl, alkyl, oleyl, and alkylaryl oxethylates.

14. The application process as claimed in claim 1, wherein the aqueous vinyl ester polymer dispersion employed comprises anionic emulsifiers selected from the group of sodium, potassium, and ammonium salts of linear aliphatic carboxylic acids of chain length C₁₂-C₂₀, sodium hydroxyoctadecanesulfonate, sodium, potassium, and ammonium salts of hydroxy fatty acids of chain length C₁₂-C₂₀ and their sulfonation, sulfation and/or acetylation products, alkyl sulfates, where appropriate in the form of triethanolamine salts, alkyl(C₁₀-C₂₀)-sulfonates, alkyl(C₁₀-C₂₀)arylsulfonates, dimethyldialkyl(C₈-C₁₉)ammonium chloride, and their sulfonation products, lignosulfonic acid and its calcium, magnesium, sodium, and ammonium salts, resin acids, hydrogenated and dehydrogenated resin acids, and their alkali metal salts, dodecylated sodium diphenyl ether disulfonate, sodium lauryl sulfate, ethoxylated sodium lauryl ether sulfate having an EO degree of 3-7 or the salt of a bisester, of a sulfonated dicarboxylic acid having 4 to 8 carbon atoms or of a mixture of these salts.

15. The application process as claimed in claim 1, wherein the jet from the nozzle has a diameter of less than 6 mm.

16. The use of an aqueous, emulsifier-stabilized polyvinyl ester dispersion having a solids content of at least 40% by weight and a viscosity of less than 8000 mPas and whose polymer has a glass transition temperature of -30 to +40°C for nozzle application in the form of a thin jet or sections of thin jets to substrates.

17. The use as claimed in claim 16, wherein the application takes place in discrete surface sections or dotwise or linearly.

18. The use as claimed in claim 16, wherein the aqueous polyvinyl ester dispersion comprises nonionic emulsifiers having alkylene oxide groups and/or anionic emulsifiers having sulfate, sulfonate, phosphate and/or phosphonate groups.

19. The use as claimed in claim 16, wherein the nozzle application is used for bonding paper, folding boxes, UV-coated folding boxes, envelopes, brochures, and cigarettes.

## Revendications

1. Procédé d'application par des buses de colles à dispersion sur un substrat, dans lequel une dispersion aqueuse de polymère d'ester de vinyle stabilisée par des émulsionnants, avec une teneur en solide d'au moins 40 % en poids, une viscosité de moins de 8000 mPa.s, est acheminée à la buse et est appliquée sur le substrat par la buse sous la forme d'un jet mince ou de tronçons de jets minces, sachant que le polymère d'ester de vinyle présente une température de transition vitreuse, déterminée par mesure DSC avec une vitesse de chauffage de 10 K/minute, comprise entre -30 et +40 °C.

2. Procédé d'application selon la revendication 1, **caractérisé en ce que** le substrat est bidimensionnel et en même temps flexible, et **en ce que** les collages sont réalisés sur la base de papier/papier ou de papier/film de plastique.

3. Procédé d'application selon la revendication 1, **caractérisé en ce que** le polymère d'ester de vinyle de la dispersion de polymère présente une température de transition vitreuse comprise entre -30 et +15 °C.

4. Procédé d'application selon la revendication 1, **caractérisé en ce que** la dispersion de polymère d'ester de vinyle présente une viscosité comprise entre 200 et 4000 mPa.s.

5. Procédé d'application selon la revendication 1, **caractérisé en ce que** la dispersion aqueuse d'ester de polyvinyle contient au moins un copolymère d'ester de vinyle qui a été obtenu par polymérisation en émulsion d'au moins un ester de vinyle d'un acide carboxylique aliphatique et d'au moins un monomère copolymérisable avec ce dernier, en présence d'au moins un émulsionnant non ionique avec des groupes d'oxyde d'alkylène, et/ou d'au moins un émulsionnant anionique avec des groupes sulfates, sulfonates, phosphates et/ou phosphonates et, le cas échéant, en présence d'un polymère soluble dans l'eau moléculairement ou par dispersion.

6. Procédé d'application selon la revendication 1, **caractérisé en ce que** la dispersion aqueuse d'ester de polyvinyle contient au moins un copolymère d'ester de vinyle qui a été obtenu par polymérisation en émulsion d'au moins un ester de vinyle d'un acide carboxylique aliphatique et d'au moins un monomère copolymérisable avec ce dernier, en présence d'au moins un émulsionnant non ionique et/ou d'au moins un émulsionnant anionique et de 0 à 2 % en poids, rapportés à la quantité totale des monomères, d'au moins alcool polyvinylique.

7. Procédé d'application selon la revendication 1, **caractérisé en ce que** la dispersion aqueuse d'ester de polyvinyle contient au moins un copolymère d'ester de vinyle qui dérive
A1) d'esters de vinyle d'acides carboxyliques aliphatiques saturés avec une longueur de chaîne de C₁ à C₄,
A2) d'alpha-oléfines avec 2 à 8 atomes de carbone, et/ou
A3) d'esters de vinyle d'acides carboxyliques aliphatiques saturés avec une longueur de chaîne de C₅ à C_{18,}
A4) le cas échéant, d'esters d'acides mono- ou dicarboxyliques éthyléniquement insaturés, ainsi que
A5) le cas échéant, d'autres comonomères,
la somme des monomères des types A1, A2 et/ou A3 et/ou, le cas échéant, A4 et/ou, le cas échéant, A5 donnant 100 % en poids.

8. Procédé d'application selon la revendication 7, **caractérisé en ce que** le monomère du type A1 est l'acétate de vinyle.

9. Procédé d'application selon la revendication 7, **caractérisé en ce que** le copolymère d'ester de vinyle dérive de monomères du type A1, A2 et, le cas échéant, A4, et **en ce que** le monomère de type A2 est l'éthylène.

10. Procédé d'application selon la revendication 9, **caractérisé en ce que** le copolymère d'ester de vinyle est un copolymère d'acétate de vinyle et d'éthylène ou un copolymère d'acétate de vinyle et d'éthylène modifié par des monomères d'acrylate et/ou par du maléate de dialkyle.

11. Procédé d'application selon la revendication 7, **caractérisé en ce que** le copolymère d'ester de vinyle dérive de monomères du type A1, A3 et, le cas échéant, A4 et **en ce que** le monomère de type A3 est un ester de vinyle d'acides carboxyliques ramifiés en α, avec 9 à 11 atomes de carbone dans le radical acide.

12. Procédé d'application selon la revendication 1, **caractérisé en ce que** la dispersion aqueuse de polymère d'ester de vinyle contient, outre l'émulsionnant, jusqu'à 2 % en poids, rapportés à la quantité totale de monomère, d'un colloïde de protection en un polymère soluble dans l'eau ou dispersible dans l'eau.

13. Procédé d'application selon la revendication 1, **caractérisé en ce que** la dispersion aqueuse de polymère d'ester de vinyle contient des émulsionnants non ioniques qui sont choisis parmi le groupe des oxoéthylates d'acyle, d'alkyle, d'oléyle et d'alkylaryle.

14. Procédé d'application selon la revendication 1, **caractérisé en ce que** la dispersion aqueuse de polymère d'ester de vinyle contient des émulsionnants anioniques qui sont choisis parmi le groupe des sels de sodium, de potassium et d'ammonium d'acides carboxyliques aliphatiques à chaîne non ramifiée d'une longueur de chaîne de C₁₂ à C₂₀, de l'hydroxyoctadécanesulfonate de sodium, des sels de sodium, de potassium et d'ammonium d'acides gras hydroxylés à chaîne non ramifiée d'une longueur de chaîne de C₁₂ à C₂₀ et de leurs produits de sulfonation, de sulfatation et/ou d'acétylation, des sulfates d'alkyle, présents le cas échéant comme sels de la triéthanolamine, des (alkyle en C₁₀ à C₂₀)-sulfonates, des (alkyle en C₁₀ à C₂₀)-arylsulfonates, du chlorure de diméthyldi-(alkyl en C₈ à C₁₈)-ammonium et leur produits de sulfuration, de l'acide lignine sulfonique ainsi que de ses sels de calcium, de magnésium, de sodium et d'ammonium, des acides résiniques, des acides résiniques hydrogénés et déshydrogénés ainsi que leurs sels alcalins, du diphénylétherdisulfonate dodécylé de sodium, du laurylsulfate de sodium, du lauryléthersulfate de sodium éthoxylé, avec un degré d'EO compris entre 3 et 7, ou du sel d'un bis-ester, d'un acide dicarboxylique sulfoné avec 4 à 8 atomes de carbone, ou d'un mélange de ces sels.

15. Procédé d'application selon la revendication 1, **caractérisé en ce que** le jet provenant de la buse présente un diamètre inférieur à 6 mm.

16. Utilisation de dispersions aqueuses d'ester de polyvinyle stabilisée par des émulsionnants, avec une teneur en solide d'au moins 40 % en poids et une viscosité de moins de 8000 mPa.s, dont le polymère présente une température de transition vitreuse de -30 à +40 °C, pour une application par buse sur des substrats sous la forme d'un jet mince ou de tronçons de jets minces.

17. Utilisation selon la revendication 16, **caractérisée en ce que** l'application s'effectue en sections bidimensionnelles discrètes, ou ponctuellement, ou linéairement.

18. Utilisation selon la revendication 16, **caractérisée en ce que** les dispersions aqueuses d'ester de polyvinyle contiennent des émulsionnants non ioniques avec des groupes d'oxyde d'alkylène et/ou des émulsionnants anioniques avec des groupes sulfates, sulfonates, phosphates et/ou phosphonates.

19. Utilisation selon la revendication 16, **caractérisée en ce que** l'application par buse est utilisée pour le collage de papier, de caisses à déplier, de caisses à déplier avec peinture durcie aux UV, d'enveloppes de lettre, de prospectus et de cigarettes.
